Europäisches Patentamt

European Patent Office

Office européen des brevets

(11) Veröffentlichungsnummer: **0 077 545**
**B1**

(12) **EUROPÄISCHE PATENTSCHRIFT**

(45) Veröffentlichungstag der Patentschrift:
16.01.85

(51) Int. Cl.⁴: **H 04 J 3/07**, H 03 K 5/156,
H 03 K 5/01

(21) Anmeldenummer: 82109556.9

(22) Anmeldetag: 15.10.82

(54) **Verfahren zur Verhinderung von systembedingten Taktfehlern in Multiplexsystemen mit Taktanpassung.**

(30) Priorität: 16.10.81 DE 3141148

(43) Veröffentlichungstag der Anmeldung:
27.04.83 Patentblatt 83/17

(45) Bekanntmachung des Hinweises auf die Patenterteilung:
16.01.85 Patentblatt 85/3

(84) Benannte Vertragsstaaten:
AT CH FR IT LI

(56) Entgegenhaltungen:
FR - A - 2 310 661

ELECTRONIC DESIGN, Band 29, Nr. 12, Juni 1981,
Waseca, New York, (US) R. BAILEY et al.: "Recondition
logic transitions to remove undesired random pulses"

(73) Patentinhaber: **Siemens Aktiengesellschaft, Berlin und
München Wittelsbacherplatz 2, D-8000 München 2 (DE)**
Patentinhaber: **Standard Elektrik Lorenz
Aktiengesellschaft, Kurze Strasse 8,
D-7000 Stuttgart 30 (Feuerbach) (DE)**
Patentinhaber: **Philips Kommunikations Industrie AG,
Thurn-und-Taxis-Strasse 10, D-8500 Nürnberg 10 (DE)**

(72) Erfinder: **Assmus, Ulf, Dipl.-Ing., Bartningstrasse 18,
D-6100 Darmstadt (DE)**
Erfinder: **Bartel, Willy, Dipl.-Ing., Pupinweg 18,
D-6100 Darmstadt (DE)**

(74) Vertreter: **Mehl, Ernst, Dipl.-Ing. et al, Postfach 22 01 76,
D-8000 München 22 (DE)**

## Beschreibung

Die Erfindung betrifft ein Verfahren zur Verhinderung von systembedingten Taktfehlern in Multiplexsystemen mit Taktanpassung, insbesondere bei Reihenschaltung mehrerer voneinander unabhängiger Multiplexsysteme bzw. bei mit Phasenjitter hoher Frequenz und Amplitude behafteten Eingangssignalen der Multiplexsysteme sowie bei Anwendung einer positiven-(null)-negativen Taktanpassung, wie sie bei Aufbau von Multiplexsystemen höherer Hierarchie aus Untersystemen mit geringer relativer Taktfrequenzabweichung dieser Untersysteme von der Taktfrequenz des Multiplexsystems höherer Hierarchie verwendet wird.

Bei Multiplexsystemen ist es üblich, in den Eingangsschaltungen einen Phasenvergleich zwischen dem Eingangstakt (Takt des Untersystems) und dem internen Takt vorzunehmen. Bei Überschreiten einer festgelegten Phasenabweichung, hervorgerufen durch die unterschiedlichen Taktfrequenzen, wird im Sender des Multiplexsystems eine Taktkorrektur vorgenommen und die Aussendung eines Korrekturimpulses als Taktanpassungsinformation vom Sender (Multiplexer) zum Empfänger (Demultiplexer) veranlasst. Diese Korrekturimpulse ermöglichen es dem Demultiplexer, eine Taktfrequenz zu rekonstruieren, deren Mittel der Taktfrequenz des Eingangstaktes entspricht.

Üblicherweise wird die maximal zulässige Wiederholfrequenz der Korrekturimpulse (maximal zulässige Korrekturfrequenz fkzul) der erforderlichen Wiederholfrequenz angepasst, die durch die zulässigen Frequenztoleranzen der Taktfrequenzen gegeben ist. Durch die Bildung eines Multiplexüberrahmens und die Übertragung der Korrekturimpulse in nur bestimmten Zeitlagen dieses Multiplexüberrahmens ist die maximal mögliche Wiederholfrequenz der Durchführung einer Taktanpassung (maximal mögliche Korrekturfrequenz fkmax) festgelegt.

Stand der Technik ist es ebenfalls, die Länge des Multiplexüberrahmens bzw. die Anzahl der zu übertragenden Korrekturimpulse pro Multiplexüberrahmen und damit die maximal mögliche Korrekturfrequenz fkmax nach der Forderung einer möglichst raschen Rahmensynchronisation auszulegen.

Ebenso ist bekannt, die maximal zulässige Korrekturfrequenz fkzul zusätzlich der Forderung möglichst vieler kleiner Phasensprünge bei der Korrektur der Taktfrequenz anzupassen. Damit ist ein weiterer Parameter für die maximal zulässige Korrekturfrequenz fkzul gegeben.

Wird die Taktanpassung so ausgeführt, dass ein von Demultiplexer empfangener Korrekturimpuls sofort eine Korrektur der Taktfrequenz veranlasst, so wird die maximal mögliche Korrekturfrequenz fkmax grösser als die maximal zulässige Korrekturfrequenz fkzul. Somit bestimmt der Quotient $\frac{fkzul}{fkmax}$ die maximale Amplitude des Wartezeitjitters.

Nachteil des geschilderten Standes der Technik ist es, dass bei bereits verjittertem Eingangstakt am Multiplexer nicht verhindert werden kann, dass kurzzeitig die Korrekturimpulse mit einer Wiederholfrequenz von fkmax auftreten. Die dadurch auftretende Überschreitung der maximal zulässigen Korrekturfrequenz fkzul führt zu Phasensprüngen des Taktes um 2 π.

Auch mit Speichern zur Aufnahme der Korrekturimpulse kann dieser Nachteil, insbesondere bei Hintereinanderschaltung mehrerer Multiplexsysteme, nicht beseitigt werden.

Die im Hauptanspruch gekennzeichnete Erfindung löst die ihr zugrundeliegende Aufgabe, das Auftreten höherer Wiederholfrequenzen der Korrekturimpulse als der maximal zulässigen Korrekturfrequenz fkzul zu verhindern.

Vorteilhafte Weiterbildungen der Erfindung sind in den Unteransprüchen gekennzeichnet.

Die Erfindung bietet den Vorteil, dass selbst bei mehreren hintereinandergeschalteten und voneinander unabhängigen Multiplexsystemen Phasensprünge um 2 π und damit Asynchronität der Pulsrahmen sicher vermieden werden.

Vorteilhaft ist weiterhin, dass Phasenjitter mit einer Jitterfrequenz, die grösser als die maximal zulässige Korrekturfrequenz fkzul ist, geglättet wird und dadurch in diesem Fall der Phasenjitter bei mehreren hintereinandergeschalteten unabhängigen Multiplexsystemen im Mittel kleiner als der Phasenjitter eines einzelnen Multiplexsystems ist.

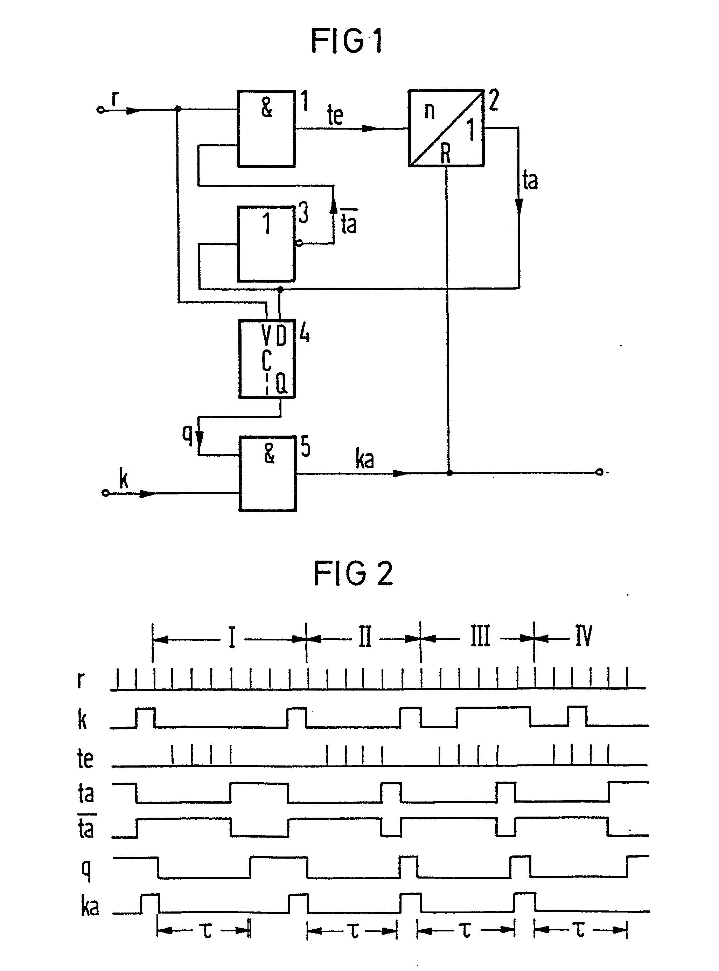

Die Erfindung und eine mögliche Schaltungsanordnung zu ihrer Durchführung werden anhand von Fig. 1 und 2 näher erläutert.

Fig. 1 zeigt diese Schaltung, und

Fig. 2 zeigt die Zeitdiagramme der in Fig. 1 vorkommenden Signale.

Fig. 1 zeigt zwei UND-Glieder 1 und 5, einen Inverter 3, ein D-Flip-Flop 4 und einen Frequenzteiler 2 mit dem Teilungsverhältnis n:1. Dieses Teilungsverhältnis berechnet sich aus dem Verhältnis der maximal möglichen Korrekturfrequenz fkmax zur maximal zulässigen Korrekturfrequenz fkzul ($\frac{fkmax}{fkzul}=n+1$), wobei n zu einer ganzen Zahl aufgerundet wird.

Die Schaltung hat einen ersten Eingang zur Aufnahme der zur Zeitsteuerung verwendeten, vom Multiplexer erzeugten Rahmenimpulse r und einen zweiten Eingang für die zu steuernden Korrekturimpulse k, die unverzögert oder, falls nötig, verzögert am Ausgang der Schutzschaltung als Ausgangskorrekturimpulse ka anstehen.

Die Funktion dieser Schaltung wird ausgehend vom stationären Zustand erläutert, d.h. eine Sperrzeit τ ist seit der Abgabe des vorhergegangenen Ausgangskorrekturimpulses ka verstrichen, das Ausgangssignal ta des Frequenzteilers 2 liegt auf HIGH-Pegel, welches über den Inverter 3 als negiertes Ausgangssignal $\overline{ta}$ einen Eingang des UND-Gliedes 1 mit LOW-Pegel ansteuert, das D-Flip-Flop 4 ist gesetzt und das Ausgangssignal q am Ausgang Q des D-Flip-Flops 4 steuert mit HIGH-Pegel einen Eingang des UND-Gliedes 5 an.

Ein am zweiten Eingang der Schaltung eintreffender Korrekturimpuls k durchläuft das UND-Glied 5 und gelangt als Ausgangskorrekturimpuls

ka ausser zum Ausgang der Schaltung auch an den Rücksetzeingang R des Frequenzteilers 2. Dadurch wird der Frequenzteiler 2 auf NULL gesetzt und das Ausgangssignal ta des Frequenzteilers 2 geht auf den LOW-Pegel. Da das Ausgangssignal ta am Eingang D des D-Flip-Flops 4 entsteht, wird nach dem Eintreffen des nächsten Rahmenimpulses r am Takteingang C dieses D-Flip-Flops 4 zurückgesetzt, und das Ausgangssignal q am Ausgang Q geht auf LOW-Pegel. Das mit dem Ausgangssignal q gesteuerte und als Torschaltung wirkende UND-Glied 5 sperrt somit alle weiteren eintreffenden Korrekturimpulse k.

Gleichzeitig öffnet das negierte Ausgangssignal ta des Frequenzteilers 2 die bis jetzt gesperrte, aus dem UND-Glied 1 gebildete Torschaltung, und die am ersten Eingang der Schaltung eintreffenden Rahmenimpulse r werden über dieses UND-Glied 1 als Eingangsimpulse te in den Frequenzteiler 2 eingelesen. Nach n Rahmenimpulsen r geht das Ausgangssignal ta des Frequenzteilers 2 auf HIGH-Pegel, so dass durch den nächsten am Takteingang C eintreffenden Rahmenimpuls r (n+1·ter $\triangleq$ Sperrzeit $\tau$) das D-Flip-Flop 4 gesetzt werden kann und der nächste, am zweiten Eingang der Schaltung eintreffende bzw. anstehende Korrekturimpuls k über das UND-Glied 5 als Ausgangskorrekturimpuls ka zum Ausgang der Schutzschaltung und zum Rücksetzeingang R des Frequenzteilers 2 gelangen kann.

Wird der z.B. durch Phasenjitter entstandene Korrekturimpuls k noch vor Beendigung der Sperrzeit $\tau$ rückgängig gemacht, so erfolgt keine Ausgabe eines Ausgangskorrekturimpulses ka durch die Schaltung.

In Fig. 2 sind die Zeitdiagramme aller in der Schaltung nach Fig. 1 auftretenden Impulse bzw. Signale dargestellt. Im einzelnen sind dies:
in der 1. Zeile die am ersten Eingang der Schaltung ankommenden Rahmenimpulse r,
in der 2. Zeile die am zweiten Eingang der Schaltung ankommenden Korrekturimpulse k,
in der 3. Zeile die Eingangsimpulse te des Frequenzteilers,
in der 4. Zeile die Ausgangsimpulse ta des Frequenzteilers,
in der 5. Zeile die negierten Ausgangsimpulse ta des Frequenzteilers,
in der 6. Zeile die Ausgangssignale q des D-Flip-Flops, und
in der 7. Zeile die Ausgangskorrekturimpulse am Ausgang der Schaltung.

Die Zeitdiagramme sind in vier Zeitabschnitte I bis IV (Spalten I bis IV) unterteilt. Im Zeitabschnitt I trifft der Korrekturimpuls k nach Beendigung der Sperrzeit $\tau$ ein. Im Zeitabschnitt II fällt das Eintreffen des Korrekturimpulses k mit der Beendigung der Sperrzeit $\tau$ zusammen. Der Zeitabschnitt III zeigt den Fall, in dem der Korrekturimpuls k vor Beendigung der Sperrzeit $\tau$ eintrifft, aber die Taktkorrektur noch nach der Sperrzeit $\tau$ notwendig ist, d.h. der Korrekturimpuls ist so lange gespeichert bzw. nicht abgearbeitet, bis die Sperrzeit $\tau$ verstrichen ist. Im Zeitabschnitt IV dagegen wird der Korrekturimpuls k noch während der Sperrzeit $\tau$ rückgängig gemacht, weil keine Taktanpassung mehr erforderlich ist.

In den Zeitabschnitten I und II passieren die Korrekturimpulse die Schaltung ohne Zeitverzögerung und erscheinen als Ausgangskorrekturimpulse ka am Ausgang der Schaltung, um eine sofortige Taktanpassung zu veranlassen. Im Zeitabschnitt III erfolgt die Abgabe des Ausgangskorrekturimpulses ka erst nach Beendigung der Sperrzeit $\tau$, und somit erfolgt auch erst dann eine Taktanpassung. In diesen Zeitabschnitten I bis III löscht die jeweilige Taktanpassung den Korrekturimpuls k und dadurch auch den Ausgangskorrekturimpuls ka.

Im Zeitabschnitt IV dagegen ist der Korrekturimpuls k noch vor Beendigung der Sperrzeit $\tau$ zurückgenommen, da die Phasenabweichung der einander anzupassenden digitalen Systeme von der ursprünglichen Überschreitung der festgelegten Phasenabweichung während dieser Sperrzeit $\tau$ auf einen Wert abgesunken ist, der kleiner ist als die festgelegte Phasenabweichung. Durch die Unterdrückung des Ausgangskorrekturimpulses in diesem Fall wird eine unnötige Taktanpassung vermieden.

Selbstverständlich müssen die mit der Schaltung ausgerüsteten digitalen Systeme mit einem der Sperrzeit $\tau$ entsprechenden Datenspeicher ausgerüstet sein, um während dieser Sperrzeit $\tau$ Bitfehler zu vermeiden.

## Patentansprüche

1. Verfahren zur Verhinderung von systembedingten Taktfehlern in Multiplexsystemen mit Taktanpassung mittels von Sendeteilen (Multiplexern) zu Empfangsteilen (Demultiplexern) übertragenen Korrekturimpulsen, wobei die maximal mögliche Korrekturfrequenz der Multiplexsysteme grösser als die maximal zulässige Korrekturfrequenz ist, dadurch gekennzeichnet, dass erst nach Verstreichen einer Sperrzeit ($\tau$), die dem Kehrwert der maximal zulässigen Korrekturfrequenz (fkzul) entspricht, die Korrekturimpulse (k), falls nach der Sperrzeit ($\tau$) eine Taktanpassung noch notwendig ist, als Ausgangskorrekturimpuls (ka) von den Multiplexern ausgesendet werden können.

2. Verfahren nach Anspruch 1, dadurch gekennzeichnet, dass jede Taktanpassung den die Taktanpassung auslösenden Korrekturimpuls (k) löscht.

3. Verfahren nach Anspruch 1, dadurch gekennzeichnet, dass je Multiplexsystem ein Frequenzteiler (2) mit einem Teilungsverhältnis n:1 die über ein UND-Glied (1) als Eingangssignale (te) an ihn gelangenden Rahmenimpulse (r) des Multiplexsystems teilt.

4. Verfahren nach Anspruch 3, dadurch gekennzeichnet, dass die Periodendauer von n+1 aufeinanderfolgenden Rahmenimpulsen (r) der Sperrzeit ($\tau$) entspricht.

5. Verfahren nach Anspruch 3, dadurch gekennzeichnet, dass der Frequenzteiler (2) durch jeden Ausgangskorrekturimpuls (ka) auf NULL
gesetzt wird.

6. Verfahren nach Anspruch 3, dadurch gekennzeichnet, dass das Ausgangssignal (ta) des
Frequenzteilers (2) negiert (3) dem zweiten Eingang des UND-Gliedes (1) zugeführt wird.

7. Verfahren nach einem der Ansprüche 3 bis 6,
dadurch gekennzeichnet, dass das UND-Glied (1)
nach n Rahmenimpulsen (r) die Eingangssignale
(te) des Frequenzteilers (2) sperrt.

8. Verfahren nach Anspruch 6, dadurch gekennzeichnet, dass ein mit den Rahmenimpulsen
(r) getaktetes D-Flip-Flop (4) von dem Frequenzteiler (2) so angesteuert wird, dass das Ausgangssignal (q) des D-Flip-Flops (4) — eine aus einem
UND-Glied (5) aufgebaute Torschaltung — während der Sperrzeit (τ) die Korrekturimpulse (k)
sperrt bzw. nach der Sperrzeit (τ) die Korrekturimpulse (k) als Ausgangskorrekturimpulse (ka) passieren lässt.

**Revendications**

1. Procédé pour empêcher des erreurs de
cadence conditionnées par le système, dans des
systèmes de multiplexage à adaptation de la
cadence, au moyen d'impulsions de correction
transmises par des éléments émetteurs (multiplexeurs) à des éléments récepteurs (démulti-
plexeurs), la fréquence maximale possible des
systèmes de multiplexage étant supérieure à la
fréquence de correction maximale admissible,
caractérisé en ce que c'est seulement après
l'écoulement d'une durée de blocage (τ), qui
correspond à la valeur inverse de la fréquence de
correction maximale admissible (fkzul), que les
impulsions de correction (k) peuvent être émises
en tant qu'impulsions de correction de sortie (ka)
par les multiplexeurs, dans le cas où une adaptation de la cadence est encore nécessaire après la
durée de blocage (τ).

2. Procédé suivant la revendication 1, caractérisé par le fait que chaque adaptation de la cadence
efface l'impulsion de correction (k) déclenchant
cette adaptation.

3. Procédé selon la revendication 1, caractérisé
par le fait que dans chaque système de multiplexage un diviseur de fréquence (2) possédant un
rapport de division n:1 divise les impulsions de
trame (r) du système de multiplexage qui parviennent en tant que signaux d'entrée (ta) à ce
diviseur, par l'intermédiaire d'un circuit ET (1).

4. Procédé suivant la revendication 3, caractérisé par le fait que la durée de la période de (n+1)
impulsions de trame successives (r) correspond à
la durée de blocage (τ).

5. Procédé suivant la revendication 3, caractérisé par le fait que le diviseur de fréquence (2) est
positionné à ZÉRO par chaque impulsion de
correction de sortie (ka).

6. Procédé suivant la revendication 3, caractérisé par le fait que le signal de sortie (ta) du diviseur
de fréquence (2) est envoyé en étant inversé (3) à
la seconde entrée du circuit ET (1).

7. Procédé suivant l'une des revendications 3 à
6, caractérisé par le fait que le circuit ET (1) bloque,
au bout de n impulsions de trame (r), le signal
d'entrée (te) du diviseur de fréquence (2).

8. Procédé suivant la revendication 6, caractérisé par le fait qu'une bascule bistable de type D
(4), commandée de façon cadencée par les
impulsions de trame (r), est commandée par le
diviseur de fréquence (2) de telle sorte que le
signal de sortie (q) de la bascule bistable de type
D (4) — un circuit de porte constitué par un circuit
ET (5) — bloque pendant la durée de blocage (τ)
les impulsions de correction (k) ou laisse passer les
impulsions de correction (k) en tant qu'impulsions
de correction de sortie (ka), après le temps de
blocage (τ).

**Claims**

1. A method of preventing clock errors,
produced by the system, in multiplex systems with
clock adaptation by means of correcting pulses
which are transmitted from transmitting sections
(multiplexers) to receiving sections (demultiplexers), where the maximum possible correcting
frequency of the multiplex systems is greater than
the maximum permissible correcting frequency,
characterised in that only following the expiration
of a blocking time (τ) which corresponds to the
inverse value of the maximum permissible correcting frequency (fkzul) can the correcting pulses
(k)—if clock adaptation is still necessary after the
blocking time (τ)—be transmitted in the form of an
output correcting pulse (ka) from the multiplexers.

2. A method as claimed in Claim 1, characterised in that each clock adaptation cancels the
correcting pulse (k) which triggers the clock
adaptation.

3. A method as claimed in Claim 1, characterised in that in respect of each multiplex system
a frequency divider (2) having a division ratio of
n:1 divides the frame pulses (r) of the multiplex
system with which it is supplied *via* an AND-gate
(1) as input signals (te).

4. A method as claimed in Claim 3, characterised in that the period duration of n+1
consecutive frame pulses (r) corresponds to the
blocking time (τ).

5. A method as claimed in Claim 3, characterised in that the frequency divider (2) is set at
ZERO by each output correcting pulse (ka).

6. A method as claimed in Claim 3, characterised in that the output signal (ta) of the
frequency divider (2) is fed in negated form (3) to
the second input of the AND-gate (1).

7. A method as claimed in one of the Claims 3 to
6, characterised in that after n frame pulses (r) the
AND-gate (1) blocks the input signals (te) of the
frequency divider (2).

8. A method as claimed in Claim 6, characterised in that a D-flip-flop (4) which is
clock-controlled by the frame pulses (r) is driven
by the frequency divider (2) in such manner that

7 0 077 545 8

the output signal (q) of the D-flip-flop (4)—a gate circuit comprising an AND-gate (5)—blocks the correcting pulses (k) during the blocking time ($\tau$) and following the blocking time ($\tau$) allows the correcting pulses (k) to pass as output correcting pulses (ka).

# FIG 1

# FIG 2